# EUROPEAN PATENT APPLICATION

(11) **EP 4 699 860 A1**
(43) Date of publication of application: **25.02.2026**
(21) Application number: 24195641.6
(22) Date of filing: 21.08.2024
(51) Int. Cl.: B60N 2/28, B60N 2/90

(54) **FOOT REST ASSEMBLY FOR A CAR CHILD SEAT**

(71) Applicant: Thule Sweden AB, 335 04 Hillerstorp (SE)
(72) Inventor: BETMARK, Peter, Malmö (SE); WINGÅRD, Olle, Limhamn (SE); BILLBERG, Gustaf, Lomma (SE)
(74) Representative: Wallentin, Lars

(57) **Abstract**

Disclosed are a foot rest assembly for a car child seat and a car child seat with a foot rest assembly. The foot rest assembly can be detachably mountable to the car child seat and can be adjustably mounted in a single insertion portion provided in the car child seat. The foot rest assembly may be foldable. The foot rest assembly may comprise a foot support section that is movable from a use position to an overload position.

## Description

### FIELD

The present disclosure relates to a foot rest assembly for a car child seat, to a car child seat configured for an attachment of such foot rest assembly, as well as to a car child seat comprising such a foot rest assembly.

### BACKGROUND

Car child seats are known. Such car child seats provide increased safety in crash situations. However, the degree of safety provided by a car child seat may depend on different factors including the seating position of a child seated in such car child seat.

### SUMMARY

The present disclosure aims at improving car child seats, in particular for children aged from 3 to 11 years, in particular at improving booster seats.

It is an object to provide an enhanced car child seat.

The object is solved by the configurations as presented in the claims, aspects and example configurations, examples and embodiments as described herein. Advantageous further formations may be gleaned from the dependent claims, dependent aspects and from the below description.

According to an aspect, a foot rest assembly for a car child seat is provided. The foot rest assembly comprises a foot support unit and an attachment portion configured to be attached, for example releasably attached, to a front portion of the car child seat.

The attachment portion may comprise a single insertion portion configured to be inserted into a single attachment section of the car child seat.

The insertion portion may comprise a base body. The base body may comprise the shape of an elongate beam or bar. In addition or alternatively, the base body may comprise a non-round cross-sectional shape, for example a trapezoidal shape, for example an isosceles trapezoid shape.

The insertion portion may comprise a guiding partner configured to receive a guiding counterpart of said attachment section. The guiding partner may be a guiding recess. The guiding counterpart may be a guiding protrusion. The guiding partner, for example the guiding recess, may be provided in an upper portion of the insertion portion. The guiding partner, for example the guiding recess, may extend in longitudinal direction of the insertion portion.

The attachment portion may comprise a locking mechanism configured to releasably lock the attachment portion to the car child seat. The locking mechanism may comprise a seat engaging portion, for example a tooth or two or more teeth, which may be configured engageable with the car child seat, for example in a direction perpendicular to an insertion direction of the insertion portion.

The seat engaging portion may be configured movable to an engaging position in which it protrudes from a lower side of the insertion portion, and to a release position in which it is retracted into the insertion portion and/or does not protrude from the insertion portion.

The foot rest assembly may further comprise a seat engaging portion operating portion operatively coupled to the seat engaging portion, for example by means of a force transfer member such as a lever. The seat engaging portion operating portion may be configured as a push portion on which a user may apply a pushing force for moving the seat engaging portion to the release position. The seat engaging operating portion may be provided on or may be accessible from an upper side of the insertion portion.

The foot rest assembly may be configured to be supported only by the car child seat and/or partially by a car seat on which the car child seat is mounted.

The foot rest assembly may be configured such that a gap is provided between the foot rest assembly and a footwell floor in front of a car seat on which the car child seat with the foot rest assembly is mounted.

The foot rest assembly may further comprise a supporting portion on which the foot support unit is supported.

The attachment portion may be configured to be attached to the car child seat at a first end portion and to be fixed to a first longitudinal end portion of the supporting portion at a second end portion. The supporting portion may comprise a predetermined length such that the gap is provided between a second longitudinal end portion of the supporting portion and the footwell floor.

The supporting portion may comprise a blocking portion for preventing that the foot support unit comes off from the second longitudinal end portion once inserted thereon. The blocking portion may be configured as a snap locking portion allowing to insert the foot support unit onto the supporting portion from the second longitudinal end portion side and blocking a detachment in opposite direction.

The foot rest assembly may be transferable between a folded configuration in which the attachment portion is folded onto the supporting portion, and an unfolded configuration in which the attachment portion is folded away from the supporting portion, for example such that the attachment portion extends at an angle equal to or larger than 80 degrees with respect to the supporting portion, for example at an angle of substantially 90 degrees.

The attachment portion may be coupled to the supporting portion by means of a hinge portion defining a rotation axis. The hinge portion may be configured such that the foot rest assembly is rotation lockable in the unfolded configuration by translatory moving the attachment portion in a locking direction perpendicular to the rotation axis towards the supporting portion and into a locking position in which a second longitudinal end portion of the attachment portion is positively received in a recess of the hinge portion. The foot rest assembly may further comprise a lock configured to arrest the second longitudinal end portion in the locking position. The lock may comprise an engaging member with an engaging portion configured to move into the recess, for example through an opening in the holder, to an engaging position in which the engaging portion can engage with the second longitudinal end portion and block its movement in a direction opposite to the locking direction. The engaging member may be biased by an urging member towards the engaging position.

The foot support unit may comprise a foot support section defining a foot support surface for supporting a foot of a child. The foot support section may be configured to move from a use position to an overload position in a predefined manner, for example by rotation about a pivot axis or along a path, when a force exceeding a predetermined threshold value is applied on the foot support surface.

The foot support section may be configured to reversibly and/or nondestructively move from the use position to the overload position.

The foot support section may be configured rotatable about a pivot axis, and/or may be rotatable such that the foot support surface tilts in forward direction and/or away from the supporting portion when moving from the use position to the overload position.

The foot rest assembly may further comprise a positioning arrangement. The positioning arrangement may be at least configured to releasably arrest the foot support section in the use position.

The positioning arrangement may comprise a first abutment portion for limiting a movement of the foot support section to the overload position and/or beyond the use position, and a rotation locking portion configured to abut against the first abutment portion. The first abutment portion and the rotation locking portion may be geometrically formed such that the rotation locking portion can pass or run over the first abutment portion when a predetermined force pushing the rotation locking portion on the first abutment portion exceeds a predetermined force, for example geometrically formed with inclined sliding surfaces that transfer a rotation movement of the rotation locking portion into a translatory movement of the rotation locking portion towards a release position.

The positioning arrangement may be further configured to releasably arrest the foot support section in a fold away position in which the foot support section is not available for supporting the feet of a child from below and takes less space in a direction perpendicular to the main extension direction of the supporting portion.

The foot support surface may comprise a convexly curved portion.

The entire foot support surface may be convexly curved. The foot support surface may be a continuous surface.

The highest point or apex point of the foot support surface may be provided in a forward end portion or forward half of the foot support surface.

According to a further aspect, a car child seat is provided. The car child seat may comprises a bottom portion and an attachment section for attaching a foot rest assembly. The attachment section may be provided in a front portion of the bottom portion.

The attachment section may be centrally provided in the front portion of the bottom portion.

The child seat may comprise only a single attachment section for a footrest assembly.

The attachment section may comprise a receiving portion for receiving a portion of the foot rest assembly, for example an insertion portion of the foot rest assembly. The receiving portion may define a channel, for example a tube-like channel, accessible through an insertion opening. In addition or alternatively, the channel and/or the insertion opening may comprise a trapezoidal cross-sectional shape. In addition or alternatively, the receiving portion may be formed by a reinforced sleeve or by a U-shaped bracket attached to a bottom plate of the car child seat at its open side such that the U-shaped bracket is closed by the bottom plate, wherein the bracket may comprise reinforcing ribs on its outer side.

The receiving portion may comprise an engagement section configured as an engagement partner of an engagement between the foot rest assembly and the car child seat. The engagement section may be a toothed section comprising several teeth. In addition or alternatively, the engagement section may extend over a predetermined length of the receiving portion in longitudinal direction of the receiving portion. In addition or alternatively, the engagement section may be formed directly in the bottom plate of the car child seat or may be formed on a separate member attached to the bottom plate.

The receiving portion may comprise a guiding protrusion protruding into an interior space of the receiving portion, wherein the guiding protrusion may extend over substantially the entire length of the receiving portion and/or wherein the guiding protrusion may be provided in an upper portion of the receiving portion and protrude downwards in the car child seat.

The car child seat may further comprise a foot rest assembly attached to the attachment section, wherein the foot rest assembly comprises one or more of the features described herein in connection with a foot rest assembly. The foot rest assembly may be position adjustably attached to the car child seat.

Other features of the present invention will be apparent from consideration of the information contained above as well as in or in combination with the following detailed description, drawings and claims. The present invention is illustrated by way of example, and not by way of limitation, in the figures of the accompanying drawings.

### BRIEF DESCRIPTION OF THE DRAWINGS

The accompanying drawings, which are incorporated herein and form part of the specification, illustrate possible configurations of embodiments and, together with the description, further serve to explain the principles of the embodiments and to enable a person skilled in the art to make and use the embodiments. It is noted that the same or similar parts in the different figures are denoted by the same reference signs.
Fig. 1 shows a perspective view on a child car seat comprising a foot rest assembly.
Fig. 2 shows a perspective view on the foot rest assembly with a foot support unit in use configuration.
Fig. 3 shows a perspective view on the foot rest assembly with the foot support unit in fold away configuration.
Fig. 4 shows a perspective view on the foot rest assembly with the foot support unit in overload configuration.
Fig. 5 shows a view on the foot support section according to an embodiment from below.
Fig. 6 shows an enlarged view of a front portion of a bottom portion of a car child seat according to an embodiment.
Fig. 7 shows an unfolded configuration of a foot rest assembly according to an embodiment.
Fig. 8 shows the foot rest assembly of Fig. 7 in sectional view.
Fig. 9 shows a perspective view on a foot rest assembly according to an embodiment.
Fig. 10 shows an enlarged perspective view on details of a positioning arrangement.
Fig. 11 shows a foot rest assembly in stowage or folded configuration.
Fig. 12 shows details of a hinge portion.
Fig. 13 shows a perspective view on a foot rest assembly attached to the bottom portion of a car child seat.
Fig. 14 shows a perspective view on a bracket according to an embodiment.

All figures are only schematic depictions of exemplary embodiments in which, in particular, distances and dimensional correlations are not presented to scale.

The features and advantages of embodiments will become more apparent from the detailed description as given below when taken in conjunction with the drawings, in which like reference signs identify corresponding elements throughout. In the drawings like reference numbers generally indicate identical, functionally similar and/or structurally similar elements.

### DETAILED DESCRIPTION

The following detailed description is merely exemplary in nature and is not intended to limit application and uses. Furthermore, there is no intention to be bound by any theory presented in the preceding background or summary or the following detailed description.

Embodiments of the present disclosure are described in detail with reference to embodiments thereof as illustrated in the accompanying drawings. References to "one embodiment," "an embodiment," "some embodiments," etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Spatially relative terms, such as "beneath," "below," "lower," "above," "on," "upper," "opposite" and the like, may be used herein for ease of description to describe one element or feature's relationship to another element(s) or feature(s) as illustrated in the figures. The spatially relative terms are intended to encompass different orientations of the device in use or in operation in addition to the orientation depicted in the figures. The apparatus may be otherwise oriented (e.g., rotated 90 degrees or at other orientations) and the spatially relative descriptors used herein may likewise be interpreted accordingly.

Terms describing parts or members as "releasable" and/or "detachable" relate to configurations in which the parts or members are at least decouplable from another part or member without destroying one of the cooperating parts or members. These terms may also describe configurations in which the parts and members may be decoupled or disengaged without tools (tool-free). Terms describing parts or members as "positively locked" and/or "positively coupled" relate to configurations in which the parts or members are in positive engagement, positive mechanical engagement or interlocked.

Some aspects of the present disclosure are defined below. These aspects may form exemplary embodiments of the present disclosure and may be combined with features mentioned in other portions of this specification.

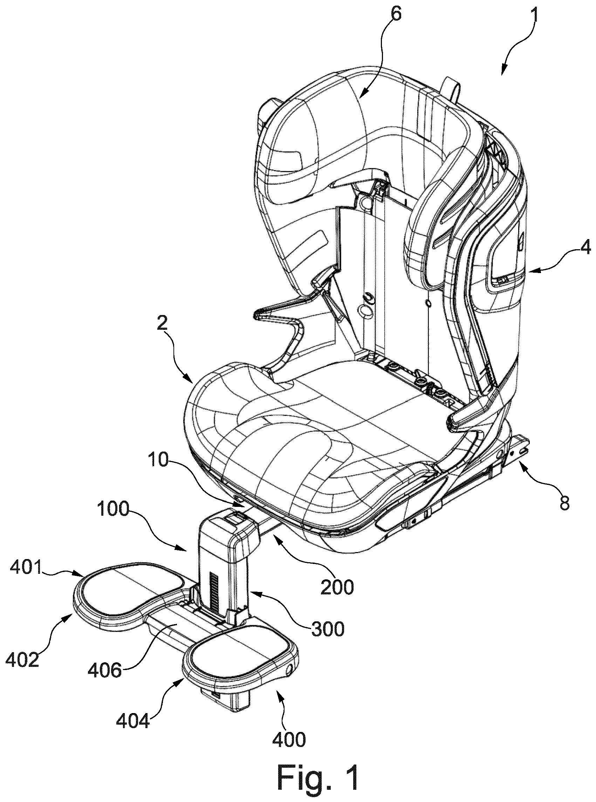

Fig. 1 shows a car child seat 1 with a foot rest assembly 100 attached to the car child seat 1.

The car child seat 1 comprises a bottom portion 2 and a backrest portion 4. On an upper portion of the backrest portion 4, a headrest portion 6 may be provided. The headrest portion 6 may be height-adjustably provided on the backrest portion 4. The car child seat 1 may further comprise a coupling portion 8 configured to be interlocked with a fixation portion on a car seat for fixing the car child seat 1 on the car seat.

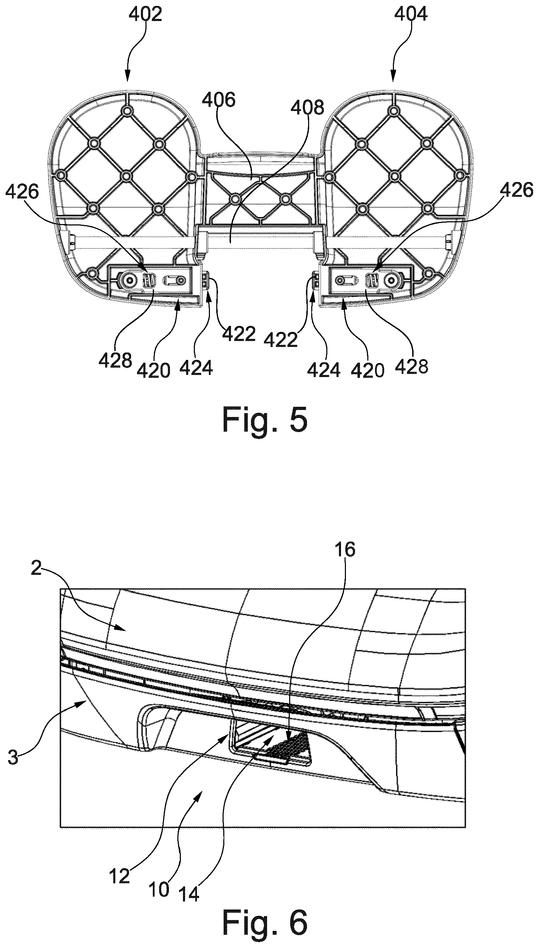

The car child seat 1 further comprises an attachment section 10. In the embodiment, the car child seat 1 comprises a single attachment section 10. Fig. 6 shows an enlarged view of a front portion 3 of the bottom portion 2 of the car child seat 1. The attachment section 10 is provided in the middle of the front portion 3. The attachment section 10 is configured for an attachment of a foot rest assembly 100. Fig. 1 shows a state in which the foot rest assembly 100 is attached to the car child seat 1.

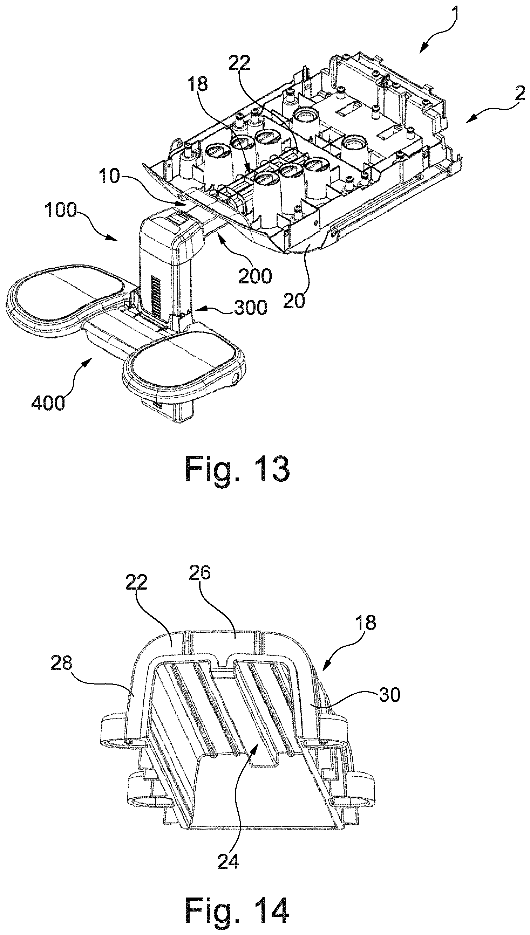

The attachment section 10 comprises a single receiving portion 14 accessible through an insertion opening 12. The receiving portion 14 may comprise a channel, for example a tube-like channel. The channel and/or the insertion opening 12 may comprise a trapezoidal cross-sectional shape, for example an isosceles trapezoid shape. As best seen in Figs. 13 and 14, the receiving portion 14 may be formed by a U-shaped bracket 18 attached to a bottom plate 20 of the car child seat 1 at its open side such that the U-shaped bracket 18 is closed by the bottom plate 20. Accordingly, the channel can be formed by mounting the U-shaped bracket 18 inversely on the bottom plate 20 from above. The bracket 18 can comprise reinforcing ribs 22 on its outer side. The U-shaped bracket 18 may comprise a base portion 26 and two leg portions 28, 30 extending from opposite sides of the base portion 26. The free ends of the leg portions 28, 30 can be coupled to the bottom plate 20. On an inner side of the bracket 18, for example on the base portion 26 of the U-shaped bracket 18, a guiding protrusion 24 may protrude into the interior space limited by the leg portions 28, 30 and the base portion 26 and may extend over substantially the entire length of the receiving portion 14 in longitudinal direction of the receiving portion 14.

On an inner side of the bottom plate 20 an engagement section 16 is provided. The engagement section 16 is configured as an engagement partner of an engagement between the foot rest assembly 100 and the car child seat 1. The engagement section 16 may comprise engaging sections at multiple positions along the longitudinal direction of the receiving portion 14. The engagement section 16 may be configured as a toothed section with several teeth. The toothed section may be provided over a predetermined length of the receiving portion 14 in longitudinal direction of the receiving portion such that it can be engaged at different positions along the receiving portion 14 or the channel. The engagement section 16 may be a single continuous section. The engagement section 16 may be formed directly in the bottom plate 20 of the car child seat 1 or may be formed on a separate member which is attached to the bottom plate 20.

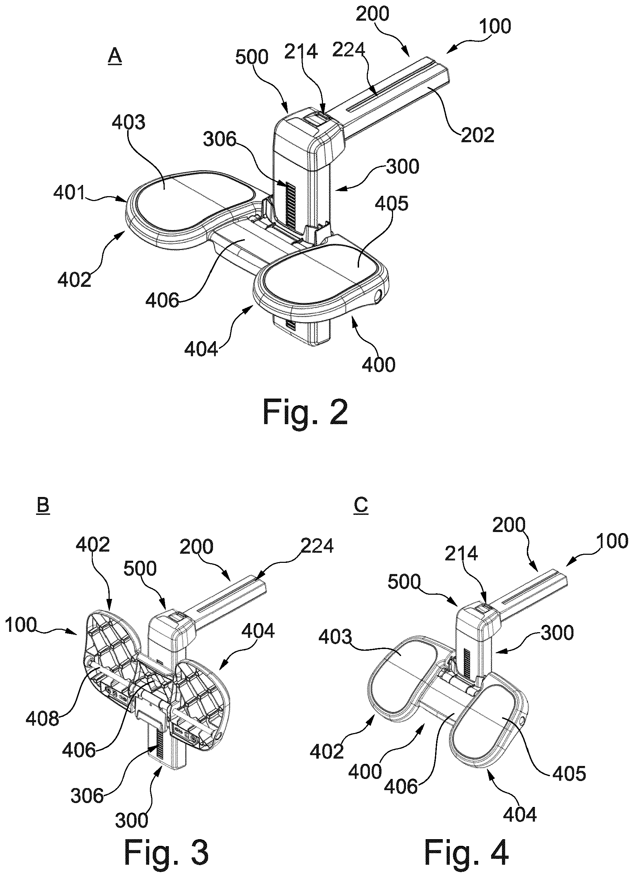

Fig. 2 shows a foot rest assembly 100 in perspective view. The foot rest assembly 100 comprises a foot support unit 400.

The foot support unit 400 comprises a foot support section 401. The foot support section 401 comprises a first foot support portion 402 for supporting a first foot of a seated child. The first foot support portion 402 may comprise a first foot support surface 403.

The foot support section 401 further comprises a second foot support portion 404 for supporting a second foot of a seated child. The second foot support portion 404 may comprise a second foot support surface 405.

The first foot support portion 402 and the second foot support portion 404 may be coupled to each other by a foot support portion coupling section 406.

The first foot support portion 402 and the second foot support portion 404 may be integrally formed, for example integrally molded.

The foot rest assembly 100 comprises an attachment portion 200 for attaching the foot rest assembly 100 to the car child seat 1.

The attachment portion 200 may comprise an insertion portion 202. The insertion portion 202 is configured to be received in the receiving portion 14.

The insertion portion 202 may comprise a trapezoidal cross-sectional shape, for example an isosceles trapezoid shape. The cross-sectional shape of the insertion portion 202 may be shaped to correspond to the cross-sectional shape of the receiving portion 14.

The insertion portion 202 may comprise a base body 203. The base body 203 may comprise the shape of an elongate beam or bar. The insertion portion 202 may comprise a first longitudinal end portion 208. The insertion portion 202 may comprise a second longitudinal end portion 210 opposite to the first longitudinal end portion 208. The first longitudinal end portion 208 may be a free end portion that is insertable into the receiving portion 14 via the insertion opening 12.

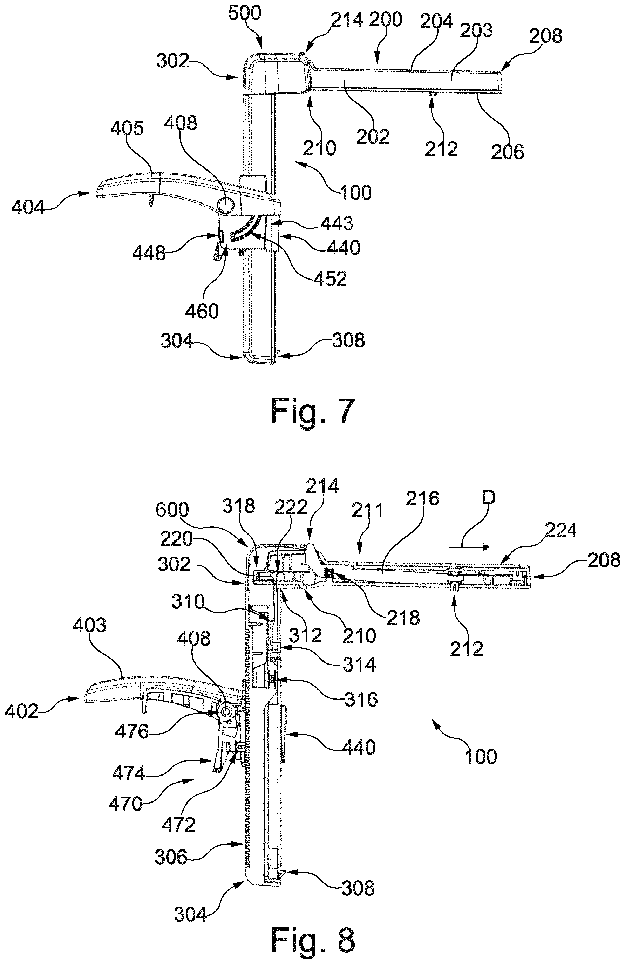

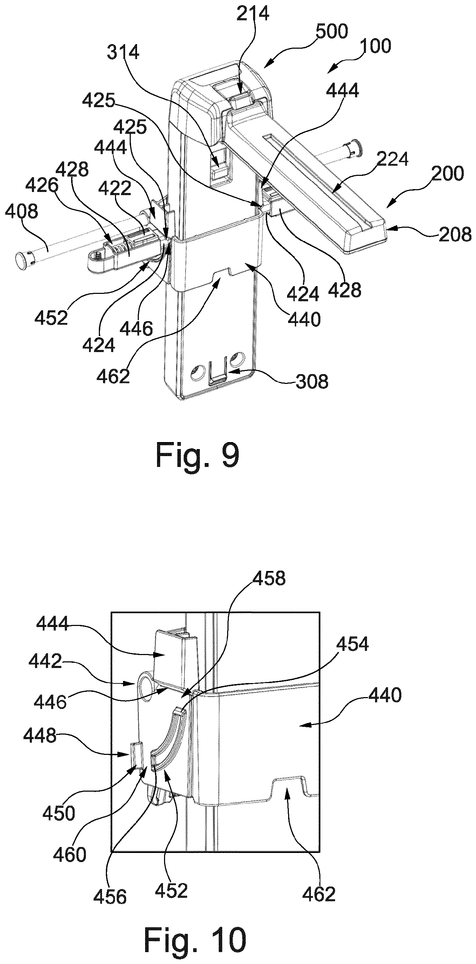

The insertion portion 202 comprises an upper portion 204 or upper side and a lower portion 206 or lower side. A guiding partner 224, in the embodiments a guiding recess, may be provided in the upper portion 204 or upper side of the insertion portion 202. The guiding recess 224 may be formed in the outer circumference of the insertion portion 202 and/or may be configured to receive a guiding protrusion 24 of the receiving portion 14 therein. The guiding recess 224 is shown in Figs. 2 to 4 and Fig. 9. The guiding recess 224 may extend in longitudinal direction of the insertion portion or, in other words, in insertion direction D (see Fig. 8) of the insertion portion 202. The guiding recess 224 is open in the insertion direction so that the guiding protrusion in the receiving portion 14 is received in the guiding recess 224 upon inserting the insertion portion 202 into the receiving portion 14. It is noted that an inverse arrangement would also be possible in which the guiding protrusion is provided on the insertion portion 202 and the guiding recess is provided in the receiving portion.

The attachment portion 200 may comprise a locking mechanism 211 configured to releasably lock the attachment portion 200 to the car child seat 1 (see Fig. 8). The locking mechanism may comprise a seat engaging portion 212. The seat engaging portion 212 may be configured engageable with the seat in a direction perpendicular to the insertion direction D of the insertion portion 202. The seat engaging portion 212 is movable to an engaging position and movable to a release position. The seat engaging portion 212 may be provided at a position closer to the free end portion of the attachment portion 200 than to the fixed end portion of the attachment portion 200. The seat engaging portion 212 may be configured to protrude from the lower portion 206 or lower side of the attachment portion when positioned in the engaging position. Accordingly, if the attachment portion 200 is received in the receiving portion 14 and the seat engaging portion 212 is in the engaging position, the seat engaging portion 212 engages with the car child seat 1, for example engages with the before described engagement section 16.

The locking mechanism may further comprise a seat engaging portion operating portion 214. The seat engaging portion operating portion 214 may be configured as a push portion on which the user applies a pushing force for operating the same. The seat engaging portion operating portion 214 may be provided on an upper portion 204 of the attachment portion 200. The seat engaging portion operating portion 214 may be provided in the second longitudinal end portion 210. The seat engaging portion operating portion 214 is operatively coupled with the seat engaging portion 212. For example, the seat engaging portion operating portion 214 may be coupled to the seat engaging portion 212 bay means of a force transfer member 216. The force transfer member 216 may be a lever. The seat engaging portion operating portion 214 may be integrally formed with the force transfer member 216. The seat engaging portion operating portion 214 may be provided on a first longitudinal end of the force transfer member 216 and/or the seat engaging portion 212 may be provided on a second longitudinal end of the force transfer member 216. The seat engaging portion operating portion 214 and the seat engaging portion 212 may be provided on opposite ends of the force transfer member and/or on opposite sides of the force transfer member (see Fig. 8). The force transfer member 216 may be supported on the insertion portion 202 at position between the seat engaging portion operating portion 214 and the seat engaging portion 212.

The seat engaging portion 212 may be biased towards the engaging position by means of an urging member 218, for example a spring. The locking mechanism may be configured such that moving the seat engaging portion 212 to the release position is only possible against an urging force of the urging member 218.

The foot rest assembly 100 may comprise a supporting portion 300. The supporting portion 300 may be configured to support the foot support unit 400. The supporting portion 300 may be configured to height adjustably support the foot support unit 400. The supporting portion 300 may be configured according to the embodiment shown in Figs. 1 to 4 and Figs. 7 to 9 and/or may comprise one or more of the features shown in Figs. 1 to 4 and Figs. 7 to 9.

The supporting portion 300 may comprise a base body. The base body may comprise the shape of an elongate beam or bar. The supporting portion 300 may comprise a first end portion or upper end portion 302. The supporting portion 300 may comprise a second end portion or lower end portion 304. The second end portion or lower end portion 304 may be a free end portion.

The first end portion 302 may be a fixed end portion that is fixed to another part of the foot rest assembly 100, for example to the attachment portion 200.

The foot rest assembly 100 may comprise a hinge portion 500. The first end portion 302 of the supporting portion 300 may be coupled to the second longitudinal end portion 210 of the attachment portion 200 by means of the hinge portion 500. The first end portion 302 and the second longitudinal end portion 210 may be hingedly coupled to each other thereby forming the hinge portion 500. The first end portion 302 and the second longitudinal end portion 210 may be hingedly coupled to each other by a pivot pin 226 defining a pivot axis. The pivot axis may extend perpendicular to the insertion direction D. The pivot axis may extend in horizontal direction in a condition in which the foot rest assembly 100 is attached to the car child seat 1 and the car child seat 1 is correctly mounted on a car seat.

The hinge portion 500 may be configured such that the attachment portion 200 and the supporting portion 300 are foldable towards and away from each other, in particular pivotable with respect to each other.

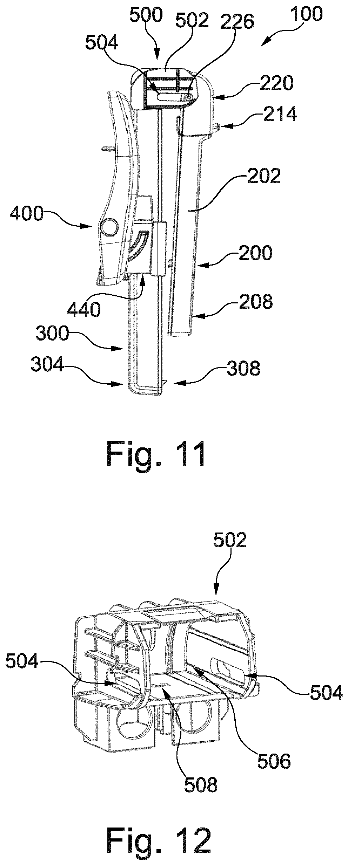

For example, the attachment portion 200 may be foldable towards the supporting portion 300, in particular such that the base body of the attachment portion 200 extends along the supporting portion 300, for example substantially in parallel with the base body of the supporting portion 300. The folded configuration of the foot rest assembly 100, in which the attachment portion 200 is folded onto the supporting portion 300 and moved to a folded position, is shown in Fig. 11. The folded configuration may be used for stowing purposes and may therefore also be referred to as stowing configuration.

The attachment portion 200 may be foldable away from the supporting portion 300 to an unfolded position corresponding to an unfolded configuration of the foot rest assembly 100, in particular such that the base body of the attachment portion 200 extends at an angle larger than 45 degrees with respect to the base body of the supporting portion 300, for example at an angle of 80 degrees or larger, for example at an angle of 90 degrees. In the unfolded configuration, the foot rest assembly 100 is in a state in which it is mountable on the car child seat 1 such that the supporting portion 300 extends downwards in front of the car seat on which the car child seat 1 is placed. It is noted that the supporting portion 300 comprises a length such that it hangs free over a footwell floor when the foot rest assembly 100 is mounted on the car child seat 1 that is placed on a car seat. In other words, the foot rest assembly may be configured such that a gap is provided between the supporting portion 300, in particular between the lower end portion 304, and the footwell floor.

The attachment portion 200 and the supporting portion 300 may be arrestable in the unfolded configuration. The foot rest assembly 100 may comprise an arresting mechanism 600. The arresting mechanism 600 may be configured to arrest the attachment portion 200 on the supporting portion 300 such that a rotational movement or folding movement between attachment portion 200 and supporting portion 300 is blocked.

The arresting mechanism 600 may comprise a first locking portion 220 provided on the attachment portion 200 and configured to engage with a first receiving portion 318 or recess 506 provided in the supporting portion 300, for example in the upper end portion 302 of the supporting portion 300, for example in the hinge mechanism 500.

The first locking portion 220 may be a protrusion or a portion of the attachment portion 200. The first locking portion 220 may be provided in the second longitudinal end portion 210 of the attachment portion 200. The first locking portion 220 may protrude in longitudinal direction of the attachment portion. The first locking portion 220 may be integrally formed in or on the base body 203 of the attachment portion 200. The first locking portion 220 may be configured to extend in longitudinal direction of the attachment portion 200.

The first receiving portion 318 may be a recess or opening, for example provided in the upper end portion 302 of the supporting portion 300, for example as a recess 506 in the hinge portion 500. The first receiving portion 318 may extend in a direction substantially perpendicular to the main extension direction of the supporting portion 300. The first receiving portion 318 may be configured to receive the first locking portion 220.

The arresting mechanism 600 may be configured such that the first locking portion 220 is engageable with the first receiving portion 318 by translatory moving the first locking portion 220 into the first receiving portion 318. This may in some configurations be done by translatory moving the entire attachment portion 200 relative to the supporting portion 300 when the attachment portion 200 is in the unfolded position.

As best seen in Fig. 11, the second longitudinal end portion 210 of the attachment portion 200 may be coupled to the upper end portion 302 of the supporting portion 300 by means of a pivot pin 226 fixedly held in the longitudinal end portion 210 and guided in a slot 504 provided in the upper end portion 302, for example in a holder 502 of the hinge portion 500. The slot 504 comprises a diameter which substantially corresponds to an outer diameter of the pivot pin 226. When rotated to the unfolded position, the first locking portion 220 may be translatory moved into the recess 506 in the holder 502 by sliding the attachment portion 200 supported by the pivot pin 226 along the slot 504 into a locking position.

It is noted that an inverse arrangement in which the first locking portion is provided on the supporting portion 300 and the first receiving portion is provided on the attachment portion 200 is also possible.

The foot rest assembly 100 may further comprise a lock configured to arrest the second longitudinal end portion 210 in said locking position in which the first locking portion 220 is inserted in the first receiving portion 318, for example in the recess 506 of the holder 502. The lock may comprise an attachment portion engagement member 310 with an attachment portion engaging portion 312 configured to move into the recess 506, for example through an opening 508 in the holder 502, to an engaging position in which the engaging portion 312 can engage with the second longitudinal end portion 210 and block its movement in a direction opposite to the locking direction, for example can engage with a second receiving portion 222 of the attachment portion 200. The engagement member 310 may be biased by an urging member 316 towards the engaging position. The engagement member 310 may be translatory movably held in the upper portion 302 of the supporting portion 300. The engagement member 310 may be operatively coupled to an engagement member operating portion 314 operable by a user for disengaging the attachment portion engaging portion 312 from the second receiving portion 222.

The foot support unit 400 may be configured height adjustable on the supporting unit 300. The supporting portion 300 may comprise an engagement portion 306 configured to be engaged by the foot support unit 400. The engagement portion 306 may be configured to allow the foot support unit 400 to engage with the engagement portion 306 at different engagement sections along the longitudinal extension of the supporting portion 300. The engagement portion 306 may provide engaging sections at different longitudinal positions along the supporting portion 300. The engagement portion 306 may be configured as a toothed section with several teeth. The toothed section may be provided over a predetermined length of the engagement portion 306 in longitudinal direction of the engagement portion 306 such that it can be engaged at different positions along the engagement portion 306. The engagement portion 306 may be a single continuous section. The engagement portion 306 may be formed directly on the base body of the supporting portion 300 or may be formed on a separate member which is attached to the base body.

The foot support unit 400 may comprise coupling portion 440 (see for example Figs. 7 and 8). The coupling portion 440 may be configured as or may comprise a bracket. The coupling portion 440 may be configured for supporting the foot support unit 400 on the supporting portion 300. The bracket 440 may be configured to support the foot support unit 400 on the supporting portion 300 shiftably in a first direction and/or longitudinal direction of the support portion 300. The bracket 440 may be configured to enclose the supporting portion 300. The bracket 440 may define a receiving opening for accommodating the supporting portion 300. The bracket 440 may comprise a sleeve portion configured to surround the supporting portion 300. The supporting portion 300 may comprise a blocking portion 308 in the lower end portion 304 for preventing that the foot support unit 400 comes off from the second longitudinal end portion 304 once inserted thereon. The foot support unit 400 may comprise a detachment blocking portion contact section 462 that may comprise a recess. The detachment blocking portion contact section 462 is configured to get in contact with the blocking portion 308. The blocking portion 308 may be configured as a snap locking portion allowing to insert the foot support unit 400 onto the supporting portion 300 from the second longitudinal end portion side and blocking a detachment in opposite direction.

The foot support unit 400 may be configured transferable between at least two configurations. The foot support unit 400 may be configured transferable between a first configuration corresponding to a use configuration A, and a second configuration corresponding to an overload configuration C.

The foot support unit 400 may be configured transferable between a first configuration corresponding to the use configuration, and a third configuration corresponding to a fold away configuration B. In the fold away configuration B, the first foot support portion 402 and the second foot support portion 404 are folded towards the supporting portion and/or are aligned with the bracket 440 and/or aligned with the supporting portion 300. In the fold away configuration B, the main extension direction of the first foot support portion 402 may extend substantially in parallel with a longitudinal direction of the supporting portion 300. The main extension direction of the first foot support portion 402 may be a direction extending parallel to middle plane of a child seat and mounted foot rest assembly 100 extending vertically and in front-to-rear-direction.

The first foot support portion 402 and the second foot support portion 404 may be arranged pivotable relative to the coupling portion 440 about a pivot member 408. The pivot member 408 may be a rod supported in a supporting section 442 on the coupling portion 440. The pivot member 408 may define a pivot axis that extends substantially horizontal when the foot rest assembly 100 is attached to the car child seat 1 and the car child seat 1 is mounted on a car seat. The pivot member 408 extends perpendicular to the main extension direction of the supporting portion 300.

As best seen in Fig. 7, the foot support portions 402, 404 may be coupled to the pivot member 408 in a rear portion of the foot support portions 402, 404. A front portion may, thus, be longer than the rear portion.

The first foot support portion 402 and the second foot support portion 404 may be pivotable or rotatable to a use position at which the first foot support portion 402 and the second foot support portion 404 are positioned for supporting the feet of a child from below. The foot support unit 400 is in the use configuration A when the foot support portions 402, 404 are in the use position. The use configuration A and the use position are shown in Figs. 1, 2, 7 and 8. When in the use position, the foot support portions 402, 404 and/or the foot support surfaces 403, 405 have a substantially horizontal main extension.

As best seen in Fig. 3, the first foot support portion 402 and the second foot support portion 404 may be pivotable or rotatable to a fold away position at which the first foot support portion 402 and the second foot support portion 404 are not available for supporting the feet of a child from below and take less space in a direction perpendicular to the main extension direction of the supporting portion 300. In the fold away position, the main extension of the foot support portions 402, 404 may be along the supporting portion 300 or in parallel with the supporting portion. The foot support unit 400 is in the fold away configuration B when the foot support portions 402, 404 are in the fold away position.

As best seen in Fig. 4, the first foot support portion 402 and the second foot support portion 404 may be pivotable or rotatable to an overload position at which the foot support portion 402 and the second foot support portion 404 or their front portions are folded downward beyond the use position. In the overload position, the main extension of the foot support portions 402, 404 may be inclined forward from supporting portion 300. When the foot support portions 402, 404 are in the overload position, the foot support unit 400 is in the overload configuration C.

The foot support unit 400 may comprise a positioning arrangement 443 configured to allow positioning the foot support portions 402, 404 at least in the use position and in the fold away position. The positioning arrangement 443 may be configured to releasably arrest the foot support portions 402, 404 in the use position and in the fold away position.

The positioning arrangement 443 may comprise a first abutment portion 444 providing a first abutment surface 446 for limiting a movement of the foot support portion 402, 404 in a first rotation direction. The first rotation direction is a direction in which the foot support portions 402, 404 are moved from the fold away position to the use position.

The positioning arrangement 443 may comprise a second abutment portion 448 providing a second abutment surface 450 for limiting a movement of the foot support portion 402, 404 in a second rotation direction which is opposite to the first rotation direction.

The positioning arrangement 443 may comprise a third abutment portion 452 provided between the first abutment portion 444 and the second abutment portion 448. The third abutment portion 452 may comprise a first end portion 454 next to the first abutment portion 444, and a second end portion 456 next to the second abutment portion 448. A first recess 458 is formed between the first abutment portion 444 and the third abutment portion 452. A second recess 460 is formed between the second abutment portion 448 and the third abutment portion 452. The third abutment portion 452 may be configured as a curved elevation. The third abutment portion 452 comprises a lower height than the first abutment portion 444 and the second abutment portion 448. All abutment portions may be provided on a side portion of the coupling portion 440. The abutment portions may protrude in lateral direction of the foot rest assembly 100.

The positioning arrangement 443 may further comprise at least one rotation locking unit 420 associated with the foot support portions 402, 404.

The rotation locking unit 420 may comprise a rotation locking member 422 having a rotation locking portion 424. The rotation locking portion 424 is configured to abut against the abutment portions and to be received in the first recess 458 and the second recess 460. The foot support portions 402, 404 are in the use position when the rotation locking portion 424 is received in the first recess 458. The foot support portions 402, 404 are in the fold away position when the rotation locking portion 424 is received in the second recess 460. The rotation locking portion 424 may comprise a first contact surface 425 configured to get in contact with the first abutment surface 446. The rotation locking portion 424 may further comprise a second contact surface configured to get in contact with the second abutment surface 450. The first contact surface 446 and the second contact surface are provided on opposite sides of the rotation locking portion 424.

The rotation locking member 422 may be movably arranged on a lower side of one of the foot support portions 402, 404. The rotation locking member 422 may be held translatory movable on the foot support portion 402, 404, for example translatory movable in a holder 428 that is attached to one of the foot support portions 402, 404. The rotation locking member 422 is movable between a locking position, a release position, and an overload position. The rotation locking member 422 may be biased towards the locking position, for example by an urging member 426.

The rotation locking portion 424 may be configured to ride and/or slide on the coupling portion 440 when the foot support portions 402, 404 are rotated. The rotation locking portion 424 may engage with the first recess 458 and the second recess 460. The first end portion 454 and the second end portion 456 may be configured as a ramp allowing the rotation locking portion 424 to slide out of the first recess 458 and the second recess 460 when a predetermined rotational force applied on the foot support portions 402, 404 is exceeded.

The first abutment surface 446 may be inclined to form a ramp for the rotation locking portion 424. The first abutment surface 446 may be configured steeper and/or longer than the first end portion 454 and the second end portion 456 such that a higher rotational force is necessary to move the rotation locking portion 424 along the first abutment surface 446 and out of the first recess 458 against the urging force of the urging member 426. Accordingly, the forward portions of the foot support portions 402, 404 move downward beyond the use position to the overload position if a sufficiently high rotational force or overload force is applied on the foot support portions 402, 404.

The foot rest assembly 100 may be configured transferrable between a stowage configuration and an attaching configuration. In the stowage configuration, the attachment portion 200 and the supporting portion 300 are moved to a space saving position (see Fig. 11). For example, the foot rest assembly 100 may comprise a hinge portion 500. The hinge portion 500 may couple the supporting portion 300 with the attachment portion 200. The supporting portion 300 and the attachment portion 200 may be foldable towards each other into the folded configuration, for example such that the attachment portion 200 and the supporting portion 300 extend substantially parallel with each other when the foot rest assembly 100 is in the stowage configuration.

The first foot support portion 402 may comprise a first foot support surface 403. The first foot support surface 403 may comprise a convex curvature. The entire first foot support surface 403 may be convex. The first foot support surface 403 may comprise a camber portion in its forward end portion. The highest point or apex of the first foot support surface 403 may be provided in the forward end portion and/or forward half of the first foot support portion 402.

The second foot support portion 404 may comprise a second foot support surface 405. The second foot support surface 405 may comprise a convex curvature. The entire second foot support surface 405 may be convex. The second foot support surface 405 may comprise a camber portion in its forward end portion. The highest point or apex of the second foot support surface 405 may be provided in the forward end portion and/or forward half of the second foot support portion 405.

The first foot support surface 403 and the second foot support surface 405 may be integrally formed as a single surface.

The foot support unit 400 may be configured adjustable in position along the supporting portion 300. The foot support unit 400 may be height adjustable on the supporting portion 300. The foot rest assembly 100 may comprise foot support unit arresting mechanism 470 configured to arrest the foot support unit 400 on the supporting portion 300. The foot support unit arresting mechanism 470 may be configured to immovably lock the foot support unit 400 on the supporting portion 300 at one or more positions, for example at predetermined positions on the supporting portion 300.

As best seen in Fig. 8, the foot support unit arresting mechanism 470 may comprise an arresting portion 472 that is configured to engage with the supporting portion 300 at different positions along the supporting portion 300. The arresting portion 472 may be configured to engage with the before described engagement portion 306 on the supporting portion 300. The arresting portion 472 may comprise one tooth or two or more teeth configured to engage with the engagement portion 306.

The arresting portion 472 is movable to an arresting position at which the arresting portion extends into the engagement portion 306, for example into recesses formed between teeth on the engagement portion 306.

The arresting portion 472 is movable to a disengaging position at which the arresting portion is removed and/or released from the engagement portion 306, for example such that it does not engage with teeth of the engagement portion 306.

The arresting portion 472 may be operatively coupled to an arresting portion operating portion 474. The arresting portion operating portion 474 may comprise a lever pivotably coupled to a pivot member, for example the pivot member 408, at an arresting portion supporting portion 476. The arresting portion may be pivotably held on the coupling portion 440, for example pivotable about a pivot axis defined by a pivot member 408. The arresting portion operating portion 474 may be configured to be grasped by a user. The arresting portion operating portion 474 may comprise a force application portion, for example a pull handle. The arresting portion operating portion 474 may be configured operable by pulling a free end thereof in a direction away from the supporting portion 300 to release an interlocking between the arresting portion 472 and the engagement portion 306.

### ASPECTS

In the following, different configurations and/or different aspects are represented in itemized structure in addition to the subject matter of claim 1 and the dependent claims and in addition to the explanations and configurations given in the introductory portion of this specification. It is to be noted that the below specific feature combinations are not intended to limit the disclosure to such specific feature combinations. By contrast, the below feature combinations merely provide different examples having improved capabilities. Features and embodiments as defined in the itemized configurations may be combined with other features and embodiments of other itemized configurations, as well as with one or more of the features of configurations described in the summary section and the detailed description section.

### Aspect A1:

Foot rest assembly (100) for a car child seat (1), comprising
a foot support unit (400), and
an attachment portion (200) configured to be releasably attached to a front portion of the car child seat (1).

### Aspect A2:

Foot rest assembly (100) according to aspect A1, wherein said attachment portion (200) comprises a single insertion portion (202) configured to be inserted into a single attachment section (10) of the car child seat (1).

### Aspect A3:

Foot rest assembly (100) according to aspect A2, wherein said insertion portion (202) may comprise a base body, wherein said base body may comprise the shape of an elongate beam or bar, and/or wherein the base body may comprise a non-round cross-sectional shape, for example a trapezoidal shape, for example an isosceles trapezoid shape.

### Aspect A4:

Foot rest assembly (100) according to aspect A2 or A3, wherein said insertion portion (202) comprises a guiding partner, for example a guiding recess (224), configured to receive a guiding counterpart, for example a guiding protrusion (24), of said attachment section (10), wherein said guiding partner, for example the guiding recess (224), may be provided in an upper portion (204) of the insertion portion (202), and/or wherein said guiding partner, for example the guiding recess (224), may extend in longitudinal direction of the insertion portion (202).

### Aspect A5:

Foot rest assembly (100) according to one of aspects A1 to A4, wherein said attachment portion (200) comprises a locking mechanism (211) configured to releasably lock the attachment portion (200) to the car child seat (1), wherein said locking mechanism (211) may comprise a seat engaging portion (212), for example a tooth or two or more teeth, which may be configured engageable with the car child seat (1), for example in a direction perpendicular to an insertion direction (D) of said insertion portion (200).

### Aspect A6:

Foot rest assembly (100) according to aspect A5, wherein said seat engaging portion (212) is configured movable to an engaging position in which it protrudes from a lower side of the insertion portion (200), and to a release position in which it is retracted into the insertion portion (200) and/or does not protrude from the insertion portion (200).

### Aspect A7:

Foot rest assembly (100) according to aspect A6, further comprising a seat engaging portion operating portion (214) operatively coupled to the seat engaging portion (212), for example by means of a force transfer member (216) such as a lever, wherein said seat engaging portion operating portion (214) may be configured as a push portion on which a user may apply a pushing force for moving the seat engaging portion (212) to the release position, and/or wherein the seat engaging operating portion (214) may be provided on or may be accessible from an upper side of the insertion portion (200).

### Aspect B1:

Foot rest assembly (100) for a car child seat (1), comprising
a foot support unit (400), and
an attachment portion (200) configured to be attached, for example releasably attached, to the car child seat (1),
wherein said foot rest assembly (100) is configured to be supported only by the car child seat (1) and/or partially by a car seat on which the car child seat (1) is mounted.

### Aspect B2:

Foot rest assembly (100) according to aspect B1, wherein said foot rest assembly (100) is configured such that a gap is provided between said foot rest assembly (100) and a footwell floor in front of a car seat on which the car child seat (1) with the foot rest assembly (100) is mounted.

### Aspect B3:

Foot rest assembly (100) according to aspect B2, further comprising
a supporting portion (300) on which said foot support unit (400) is supported,
wherein said attachment portion (200) is configured to be attached to the car child seat (1) at a first end portion (208) and to be fixed to a first longitudinal end portion (302) of the supporting portion (300) at a second end portion (210),
wherein said supporting portion (300) comprises a predetermined length such that the gap is provided between a second longitudinal end portion (304) of the supporting portion (300) and the footwell floor.

### Aspect B4:

Foot rest assembly (100) according to aspect B3,
wherein said supporting portion (300) comprises a blocking portion (308) for preventing that the foot support unit (400) comes off from the second longitudinal end portion (304) once inserted thereon, wherein said blocking portion (308) may be configured as a snap locking portion allowing to insert said foot support unit (400) onto said supporting portion (300) from said second longitudinal end portion side and blocking a detachment in opposite direction.

### Aspect B5:

Foot rest assembly (100) according to one of aspects B3 and B4, wherein said foot rest assembly (100) is transferable between a folded configuration in which the attachment portion (200) is folded onto the supporting portion (300), and an unfolded configuration in which the attachment portion (200) is folded away from the supporting portion (300), for example such that the attachment portion (200) extends at an angle equal to or larger than 80 degrees with respect to the supporting portion (300), for example at an angle of substantially 90 degrees.

### Aspect B6:

Foot rest assembly (100) according to aspect B5, wherein said attachment portion (200) is coupled to said supporting portion (300) by means of a hinge portion (500) defining a rotation axis, wherein said hinge portion (500) is configured such that said foot rest assembly (100) is rotation lockable in the unfolded configuration by translatory moving the attachment portion (200) in a locking direction perpendicular to the rotation axis towards the supporting portion (300) and into a locking position in which a second longitudinal end portion (210) of the attachment portion is positively received in a recess (506) of said hinge portion (500), wherein said foot rest assembly (100) may further comprise a lock configured to arrest the second longitudinal end portion (210) in said locking position, wherein said lock may comprise an engaging member (310) with an engaging portion (312) configured to move into said recess (506), for example through an opening (508) in the holder (502), to an engaging position in which the engaging portion (312) can engage with the second longitudinal end portion (210) and block its movement in a direction opposite to the locking direction, wherein the engaging member (310) may be biased by an urging member towards the engaging position.

### Aspect C1:

Foot rest assembly (100) for a car child seat (1), comprising
a supporting portion (300), and
a foot support unit (400) supported by the supporting portion (300),
wherein said foot support unit (400) comprises a foot support section (401) defining a foot support surface (403, 405) for supporting a foot of a child, wherein said foot support section (401) is configured to move from a use position to an overload position in a predefined manner, for example by rotation about a pivot axis or along a path, when a force exceeding a predetermined threshold value is applied on said foot support surface (403, 405).

### Aspect C2:

Foot rest assembly (100) according to aspect C1,
wherein said foot support section (401) is configured to reversibly and/or nondestructively move from the use position to the overload position.

### Aspect C3:

Foot rest assembly (100) according to aspect C1 or C2,
wherein said foot support section (401) is configured rotatable about a pivot axis, and/or is rotatable such that said foot support surface (403, 405) tilts in forward direction and/or away from the supporting portion (300) when moving from the use position to the overload position.

### Aspect C4:

Foot rest assembly (100) according to one of aspects C1 to C3, further comprising a positioning arrangement (443), wherein the positioning arrangement (443) is at least configured to releasably arrest the foot support section (401) in the use position.

### Aspect C5:

Foot rest assembly (100) according to aspect C4, wherein the positioning arrangement (443) comprises a first abutment portion (444) for limiting a movement of the foot support section (401) to the overload position and/or beyond the use position, and a rotation locking portion (424) configured to abut against the first abutment portion (444), wherein the first abutment portion (444) and the rotation locking portion (424) are geometrically formed such that the rotation locking portion (424) can pass or run over the first abutment portion when a predetermined force pushing the rotation locking portion (424) on the first abutment portion (444) exceeds a predetermined force, in particular geometrically formed with inclined sliding surfaces that transfer a rotation movement of the rotation locking portion (424) into a translatory movement of the rotation locking portion (424) towards a release position.

### Aspect C6:

Foot rest assembly (100) according to one of aspects C4 or C5, wherein the positioning arrangement (443) is further configured to releasably arrest the foot support section (401) in a fold away position in which the foot support section (401) is not available for supporting the feet of a child from below and takes less space in a direction perpendicular to the main extension direction of the supporting portion (300).

### Aspect D1:

Foot rest assembly (100) for a car child seat (1), comprising a foot support unit (400),
wherein said foot support unit (400) comprises a foot support section (401) with a foot support surface (403, 405) for supporting a foot of a child,
wherein said foot support surface (403, 405) comprises a convexly curved portion.

### Aspect D2:

Foot rest assembly (100) according to aspect D1,
wherein the entire foot support surface (403, 405) is convexly curved and/or wherein said foot support surface (403, 405) is a continuous surface.

### Aspect D3:

Foot rest assembly (100) according to aspect D1 or aspect D2,
wherein the highest point or apex point of the foot support surface (403, 405) is provided in a forward end portion or forward half of the foot support surface (403, 405).

### Aspect E1:

Car child seat (1) comprising
a bottom portion (2), and
an attachment section (10) for attaching a foot rest assembly (100),
wherein said attachment section (10) is provided in a front portion of said bottom portion (2).

### Aspect E2:

Car child seat (1) according to aspect E1, wherein said attachment section (10) is centrally provided in said front portion of said bottom portion (2).

### Aspect E3:

Car child seat (1) according to aspect E1 or E2, wherein said child seat comprises only a single attachment section (10).

### Aspect E4:

Car child seat (1) according to aspect E3, wherein said attachment section (10) comprises a receiving portion (14) for receiving a portion of said foot rest assembly (100), for example an insertion portion (200) of said foot rest assembly (100), wherein said receiving portion (14) may define a channel, for example a tube-like channel, accessible through an insertion opening (12), and/or wherein said channel and/or said insertion opening (12) may comprise a trapezoidal cross-sectional shape, and/or wherein said receiving portion (14) may be formed by a reinforced sleeve or by a U-shaped bracket (18) attached to a bottom plate (20) of the car child seat (1) at its open side such that the U-shaped bracket (18) is closed by the bottom plate (20), wherein the bracket (18) may comprise reinforcing ribs (22) on its outer side.

### Aspect E5:

Car child seat (1) according to aspect E4, wherein said receiving portion (14) comprises an engagement section (16) configured as an engagement partner of an engagement between the foot rest assembly (100) and the car child seat (1), wherein the engagement section (16) may be a toothed section comprising several teeth, and/or wherein the engagement section (16) may extend over a predetermined length of the receiving portion (14) in longitudinal direction of the receiving portion (14), and/or wherein the engagement section (16) may be formed directly in the bottom plate (20) of the car child seat (1) or may be formed on a separate member attached to the bottom plate (20).

### Aspect E6:

Car child seat (1) according to aspect E4 or E5, wherein the receiving portion (14) comprises a guiding protrusion (24) protruding into an interior space of said receiving portion (14), wherein the guiding protrusion (24) may extend over substantially the entire length of the receiving portion (14) and/or wherein the guiding protrusion (24) may be provided in an upper portion of the receiving portion (14) and protrude downwards in the car child seat (1).

### Aspect E7:

Car child seat (1) according to one of aspects E1 to E6, further comprising a foot rest assembly (100) attached to the attachment section (10), wherein the foot rest assembly (100) may be a foot rest assembly (100) according to one of aspects A1 to A7, B1 to B6, C1 to C6, or D1 to D3 and/or wherein the foot rest assembly (100) is position adjustably attached to the car child seat (1).

**REFERENCE SIGNS**

| | | | |
|---|---|---|---|
| 1 | Car child seat | 316 | Biasing member / urging member |
| 2 | Bottom portion | 318 | First receiving portion |
| 3 | Front portion | 400 | Foot support unit |
| 4 | Backrest portion | 401 | Foot support section |
| 6 | Headrest portion | 402 | First (right) foot support portion |
| 8 | Coupling portion | 403 | First foot support surface |
| 10 | Attachment section | 404 | Second (left) foot support portion |
| 12 | Insertion opening | 405 | Second foot support surface |
| 14 | Receiving portion | 406 | Foot support portion coupling section |
| 16 | Engagement section | 408 | Pivot member/ pivot rod/Pivot axis |
| 18 | Bracket | 420 | Rotation locking unit |
| 20 | Bottom plate | 422 | Rotation locking member |
| 22 | Reinforcing rib | 424 | Rotation locking portion |
| 24 | Guiding protrusion | 425 | Contact surface |
| 26 | Base portion | 426 | Urging member |
| 28 | Leg portion | 428 | Holder |
| 30 | Leg portion | 440 | Coupling portion / Bracket |
| 100 | Foot rest assembly | 442 | Foot support portion supporting section |
| 200 | Attachment portion | | |
| 202 | Insertion portion | 443 | Positioning arrangement |
| 203 | Base body | 444 | First abutment portion |
| 204 | Upper portion | 446 | First abutment surface |
| 206 | Lower portion | 448 | Second abutment portion |
| 208 | First longitudinal end portion | 450 | Second abutment surface |
| 210 | Second longitudinal end portion | 452 | Third abutment portion |
| 211 | Locking mechanism | 454 | First end portion |
| 212 | Seat engaging portion | 456 | Second end portion |
| 214 | Seat engaging portion operating portion | 458 | First recess |
| | | 460 | Second recess |
| 216 | Force transfer member | 462 | Detachment blocking portion contact section / recess |
| 218 | Urging member | | |
| 220 | First locking portion | 470 | Foot support unit arresting mechanism |
| 222 | Second receiving portion | | |
| 224 | Guiding partner / Guiding recess | 472 | Arresting portion |
| 226 | Pivot pin | 474 | Arresting portion operating portion |
| 300 | Supporting portion | 476 | Arresting portion supporting portion |
| 302 | Upper end portion | 500 | Hinge portion |
| 304 | Lower end portion | 502 | Holder |
| 306 | Engagement portion | 504 | Slot |
| 308 | Blocking portion | 506 | Recess |
| 310 | Attachment portion engagement member | 508 | Opening |
| | | 600 | Arresting mechanism |
| 312 | Attachment portion engagement portion | A | Use configuration |
| | | B | Fold away configuration |
| 314 | Engagement member operating portion | C | Overload configuration |
| | | D | Insertion direction |

## Claims

1. Foot rest assembly (100) for a car child seat (1), comprising
a foot support unit (400),
a supporting portion (300) supporting the foot support unit (400), and
an attachment portion (200) configured to be attached, for example adjustably and/or releasably attached, to a front portion of the car child seat (1).

2. Foot rest assembly (100) according to claim 1,
wherein said attachment portion (200) comprises a single insertion portion (202) configured to be inserted into a single attachment section (10) of the car child seat (1),
wherein said insertion portion (202) may comprise a base body,
wherein said base body may comprise the shape of an elongate beam or bar,
and/or wherein the base body may comprise a non-round cross-sectional shape, for example a trapezoidal shape, for example an isosceles trapezoid shape,
and/or wherein said insertion portion (202) may comprise a guiding partner, for example a guiding recess (224), configured to receive a guiding counterpart, for example a guiding protrusion (24), of said attachment section (10),
wherein said guiding partner, for example the guiding recess (224), may be provided in an upper portion (204) of the insertion portion (202),
and/or wherein said guiding partner, for example the guiding recess (224), may extend in longitudinal direction of the insertion portion (202).

3. Foot rest assembly (100) according to claim 1 or claim 2,
wherein said attachment portion (200) comprises a locking mechanism (211) configured to releasably lock the attachment portion (200) to the car child seat (1),
wherein said locking mechanism (211) may comprise a seat engaging portion (212), for example a tooth or two or more teeth, which may be configured engageable with the car child seat (1), for example in a direction perpendicular to an insertion direction (D) of said insertion portion (200).

4. Foot rest assembly (100) according to claim 3,
wherein said seat engaging portion (212) is configured movable to an engaging position in which it protrudes from a lower side of the insertion portion (200), and to a release position in which it is retracted into the insertion portion (200) and/or does not protrude from the insertion portion (200), and
wherein said foot rest assembly (100) can further comprise a seat engaging portion operating portion (214) operatively coupled to the seat engaging portion (212), for example by means of a force transfer member (216) such as a lever,
wherein said seat engaging portion operating portion (214) may be configured as a push portion on which a user may apply a pushing force for moving the seat engaging portion (212) to the release position,
and/or wherein the seat engaging operating portion (214) may be provided on or may be accessible from an upper side of the insertion portion (200).

5. Foot rest assembly (100) according to claim 1,
wherein said foot rest assembly (100) is configured to be supported only by the car child seat (1) and/or partially by a car seat on which the car child seat (1) is mounted, in particular such that a gap is provided between said foot rest assembly (100) and a footwell floor in front of a car seat on which the car child seat (1) with the foot rest assembly (100) is mounted.

6. Foot rest assembly (100) according to claim 5,
wherein said attachment portion (200) is configured to be attached to the car child seat (1) at a first end portion (208) and to be fixed to a first longitudinal end portion (302) of the supporting portion (300) at a second end portion (210),
wherein said supporting portion (300) comprises a predetermined length such that the gap is provided between a second longitudinal end portion (304) of the supporting portion (300) and the footwell floor,
wherein said supporting portion (300) may comprise a blocking portion (308) for preventing that the foot support unit (400) comes off from the second longitudinal end portion (304) once inserted thereon,
wherein said blocking portion (308) may be configured as a snap locking portion allowing to insert said foot support unit (400) onto said supporting portion (300) from said second longitudinal end portion side and blocking a detachment in opposite direction.

7. Foot rest assembly (100) according to claim 6,
wherein said foot rest assembly (100) is transferable between a folded configuration in which the attachment portion (200) is folded onto the supporting portion (300), and an unfolded configuration in which the attachment portion (200) is folded away from the supporting portion (300), for example such that the attachment portion (200) extends at an angle equal to or larger than 80 degrees with respect to the supporting portion (300), for example at an angle of substantially 90 degrees,
wherein said attachment portion (200) may be coupled to said supporting portion (300) by means of a hinge portion (500) defining a rotation axis, wherein said hinge portion (500) is configured such that said foot rest assembly (100) is rotation lockable in the unfolded configuration by translatory moving the attachment portion (200) in a locking direction perpendicular to the rotation axis towards the supporting portion (300) and into a locking position in which a second longitudinal end portion (210) of the attachment portion is positively received in a recess (506) of said hinge portion (500),
wherein said foot rest assembly (100) may further comprise a lock configured to arrest the second longitudinal end portion (210) in said locking position,
wherein said lock may comprise an engaging member (310) with an engaging portion (312) configured to move into said recess (506), for example through an opening (508) in the holder (502), to an engaging position in which the engaging portion (312) can engage with the second longitudinal end portion (210) and block its movement in a direction opposite to the locking direction,
wherein the engaging member (310) may be biased by an urging member towards the engaging position.

8. Foot rest assembly (100) according to one of the preceding claims,
wherein said foot support unit (400) comprises a foot support section (401) defining a foot support surface (403, 405) for supporting a foot of a child.

9. Foot rest assembly (100) according to claim 8,
wherein said foot support section (401) is configured to move from a use position to an overload position in a predefined manner, for example by rotation about a pivot axis or along a path, when a force exceeding a predetermined threshold value is applied on said foot support surface (403, 405).

10. Foot rest assembly (100) according to claim 9,
wherein said foot support section (401) is configured to reversibly and/or nondestructively move from the use position to the overload position,
and/or
wherein said foot support section (401) is configured rotatable about a pivot axis, and/or is rotatable such that said foot support surface (403, 405) tilts in forward direction and/or away from the supporting portion (300) when moving from the use position to the overload position.

11. Foot rest assembly (100) according to one of claims 9 and 10,
further comprising a positioning arrangement (443),
wherein the positioning arrangement (443) is at least configured to releasably arrest the foot support section (401) in the use position,
wherein the positioning arrangement (443) may comprise a first abutment portion (444) for limiting a movement of the foot support section (401) to the overload position and/or beyond the use position, and may comprise a rotation locking portion (424) configured to abut against the first abutment portion (444), wherein the first abutment portion (444) and the rotation locking portion (424) may be geometrically formed such that the rotation locking portion (424) can pass or run over the first abutment portion when a predetermined force pushing the rotation locking portion (424) on the first abutment portion (444) exceeds a predetermined force, in particular geometrically formed with inclined sliding surfaces that transfer a rotation movement of the rotation locking portion (424) into a translatory movement of the rotation locking portion (424) towards a release position,
and/or
wherein the positioning arrangement (443) is configured to releasably arrest the foot support section (401) in a fold away position in which the foot support section (401) is not available for supporting the feet of a child from below and takes less space in a direction perpendicular to the main extension direction of the supporting portion (300).

12. Foot rest assembly (100) according to claim 8,
wherein said foot support surface (403, 405) comprises a convexly curved portion,
and/or
wherein the entire foot support surface (403, 405) is convexly curved,
and/or
wherein said foot support surface (403, 405) is a continuous surface,
and/or
wherein the highest point or apex point of the foot support surface (403, 405) is provided in a forward end portion or forward half of the foot support surface (403, 405).

13. Car child seat (1) comprising
a bottom portion (2), and
an attachment section (10) for attaching a foot rest assembly (100), for example a foot rest assembly (100) according to one of the preceding claims,
wherein said attachment section (10) is provided in a front portion of said bottom portion (2), for example centrally provided in said front portion of said bottom portion (2), wherein said child seat may comprise only a single attachment section (10).

14. Car child seat (1) according to claim 13,
wherein said attachment section (10) comprises a receiving portion (14) for receiving a portion of said foot rest assembly (100), for example an insertion portion (200) of said foot rest assembly (100),
wherein said receiving portion (14) may define a channel, for example a tube-like channel, accessible through an insertion opening (12),
and/or wherein said channel and/or said insertion opening (12) may comprise a trapezoidal cross-sectional shape, and/or wherein said receiving portion (14) may be formed by a reinforced sleeve or by a U-shaped bracket (18) attached to a bottom plate (20) of the car child seat (1) at its open side such that the U-shaped bracket (18) is closed by the bottom plate (20), wherein the bracket (18) may comprise reinforcing ribs (22) on its outer side,
wherein said receiving portion (14) may comprise an engagement section (16) configured as an engagement partner, for example a recess, of an engagement between the foot rest assembly (100) and the car child seat (1),
wherein the engagement section (16) may be a toothed section comprising several teeth,
and/or wherein the engagement section (16) may extend over a predetermined length of the receiving portion (14) in longitudinal direction of the receiving portion (14),
and/or wherein the engagement section (16) may be formed directly in the bottom plate (20) of the car child seat (1) or may be formed on a separate member attached to the bottom plate (20).

15. Car child seat (1) according to claim 13 or claim 14,
wherein the receiving portion (14) comprises a guiding protrusion (24) protruding into an interior space of said receiving portion (14),
wherein the guiding protrusion (24) may extend over substantially the entire length of the receiving portion (14),
and/or wherein the guiding protrusion (24) may be provided in an upper portion of the receiving portion (14) and protrude downwards in the car child seat (1).
